Europäisches Patentamt

European Patent Office

Office européen des brevets

(11) Numéro de publication: **0 451 418 A1**

## (12) DEMANDE DE BREVET EUROPEEN

(21) Numéro de dépôt: 90400907.3

(22) Date de dépôt: 03.04.90

(51) Int. Cl.5: **G03B 21/56**

(43) Date de publication de la demande:
16.10.91 Bulletin 91/42

(84) Etats contractants désignés:
AT BE CH DE DK ES GB GR IT LI LU NL SE

(71) Demandeur: **Chamayou, Gérard, dit Félix**
**93, rue Broca**
**F-75013 Paris(FR)**

(72) Inventeur: **Chamayou, Gérard, dit Félix**
**93, rue Broca**
**F-75013 Paris(FR)**

(74) Mandataire: **Geismar, Thierry et al**
**Cabinet Nony 29, rue Cambacérès**
**F-75008 Paris(FR)**

(54) Salle de projection cinématographique à écran sphérique.

(57) L'invention est relative à une salle de projection cinématographique à écran sphérique.

Elle comprend une ossature de support d'écran comportant un ensemble de poutres (5) sensiblement verticales disposées sur un arc de cercle vues en projection dans un plan horizontal, un ensemble de poutres circulaires formant des arcs de grands cercles principaux dans les plans verticaux des poutres verticales passant par le centre de l'écran, et des arcs de cercles horizontaux, lesdites poutres circulaires et les arcs de cercles horizontaux étant montés sur les poutres verticales, des plaques d'écran de forme trapézoïdale sont montées sur lesdits arcs de grands cercles principaux et lesdits arcs de cercles horizontaux.

EP 0 451 418 A1

La présente invention concerne une salle de projection cinématographique à écran sphérique.

On connaît déjà de telles salles de projection dans lesquelles l'écran est formé de plaques triangulaires montées sur une structure géodésique porteuse par l'intermédiaire d'une ossature secondaire réticulée.

Un tel agencement donne toute satisfaction dans le cas d'un écran à relativement forte courbure, par exemple d'un écran de planétarium. Il présente toutefois l'inconvénient de comporter une structure porteuse et une ossature secondaire complexes, et par conséquent onéreuses, ainsi que de nécessiter un très grand nombre de formes différentes de plaques d'écran.

La présente invention vise à pallier ces inconvénients en fournissant une salle de projection à écran sphérique de structure plus simple, utilisable notamment dans le cas d'un rayon de courbure relativement grand par rapport aux dimensions de la salle.

A cet effet, l'invention a pour objet une salle de projection cinématographique à écran sphérique, caractérisée par le fait qu'elle comprend une ossature de support d'écran comportant un ensemble de poutres sensiblement verticales disposées sur un arc de cercle vues en projection dans le plan horizontal, un ensemble de poutres circulaires formant des arcs de grands cercles principaux dans les plans verticaux des poutres verticales passant par le centre de l'écran, et des arcs de cercles horizontaux, lesdites poutres circulaires et les arcs de cercles horizontaux étant montés sur les poutres verticales, et que des plaques d'écran de forme trapézoïdale sont montées sur lesdits arcs de grands cercles principaux et lesdits arcs de cercles horizontaux.

La structure porteuse de l'écran est par conséquent une structure à mailles sensiblement trapézoïdales, nécessitant par conséquent un moins grand nombre de formes de plaques différentes.

Par ailleurs, cette structure porteuse est simplement montée sur des poutres disposées verticalement en arcs de cercles, ce qui présente également une beaucoup plus grande simplicité que les structures géodésiques connues.

L'ossature peut en outre comprendre des arcs de grands cercles intermédiaires montés sur les arcs de cercles horizontaux ainsi éventuellement que des traverses horizontales circulaires intermédiaires montées sur les arcs de grands cercles principaux et intermédiaires, les arcs de grands cercles principaux et les arcs de cercles horizontaux formant alors la trame principale de l'écran, et les arcs de grands cercles intermédiaires et les traverses horizontales en formant la trame fine sur laquelle sont montées lesdites plaques d'écran.

De préférence, les plaques d'écran sont embouties avant leur montage sur l'ossature de support.

Cet emboutissage permet de donner une double courbure aux plaques d'écran, c'est-à-dire une courbure dans deux plans perpendiculaires passant par la normale à la plaque. Il apporte donc une très grande précision dans la réalisation de la sphère formant l'écran.

On notera que l'on utilise de préférence des plaques d'écran de relativement petites dimensions pour réduire le coût des matrices et des poinçons utilisés dans cette opération d'emboutissage.

Selon l'invention, lesdites poutres verticales peuvent en outre supporter, du côté opposé à l'écran, une paroi cylindrique de fond à axe vertical passant par le centre de l'écran, l'écran se trouvant ainsi intégré aux parois même de la salle de projection.

Un portique vertical de charpente peut en outre former, en combinaison avec la partie supérieure des poutres verticales, un support pour la partie de fond de la toiture de la salle, l'écran étant alors totalement intégré à la fois à la paroi de fond et à la toiture de la salle.

On décrira maintenant à titre d'exemple non limitatif un mode de réalisation particulier de l'invention en référence aux dessins schématiques annexés dans lesquels :

- la figure 1 est une vue en coupe longitudinale d'une salle de projection cinématographique selon l'invention,

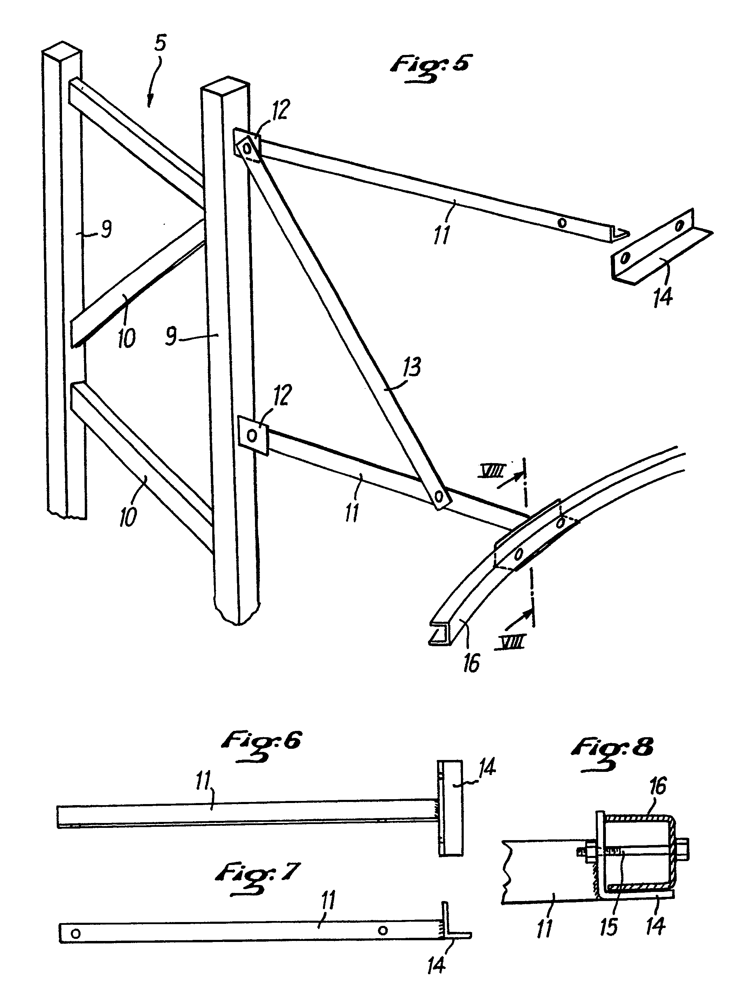

- la figure 2 est une vue en perspective de la partie de fond de cette salle,
- la figure 3 est une vue de dessus de cette partie de fond,
- la figure 4 est une vue plus détaillée d'une trame principale de l'ossature de support d'écran,
- la figure 5 est une vue à plus grande échelle en perspective du détail V de la figure 1,
- les figures 6 et 7 sont des vues respectivement de dessus et de côté d'un des éléments de la figure 5,
- la figure 8 est une vue en coupe selon la ligne VIII-VIII de la figure 5,
- la figure 9 est une vue à plus grande échelle du détail IX de la figure 4,
- la figure 10 en est une vue de côté,
- la figure 11 est une vue de l'organe de montage utilisé dans les figures 9 et 10,
- la figure 12 est une vue illustrant la trame fine de montage de l'écran, et
- la figure 13 représente une plaque d'écran montée sur cette trame.

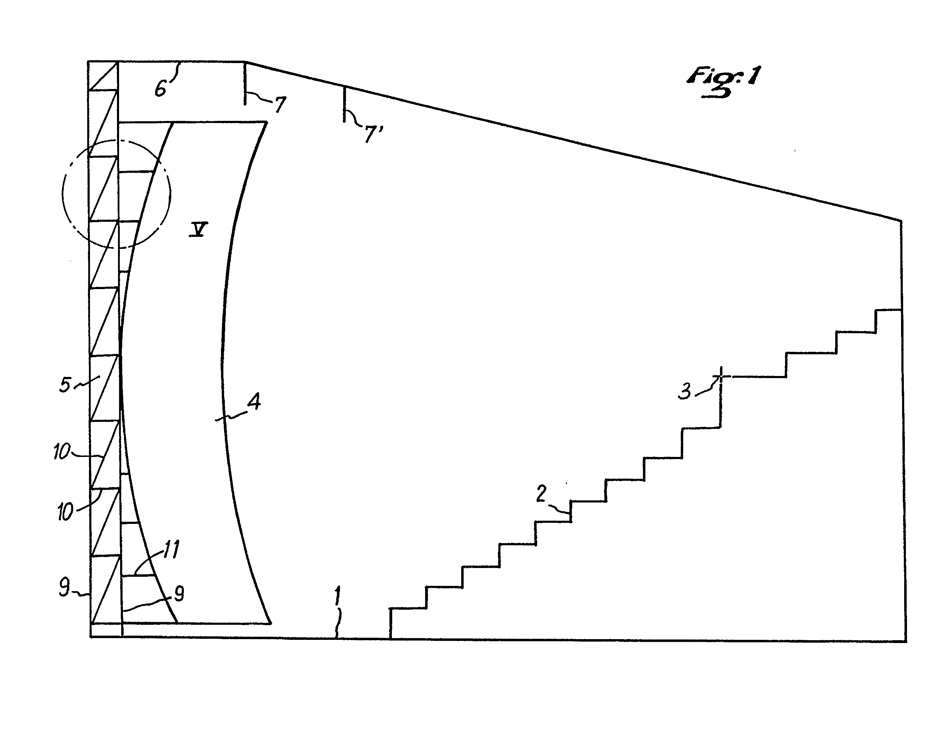

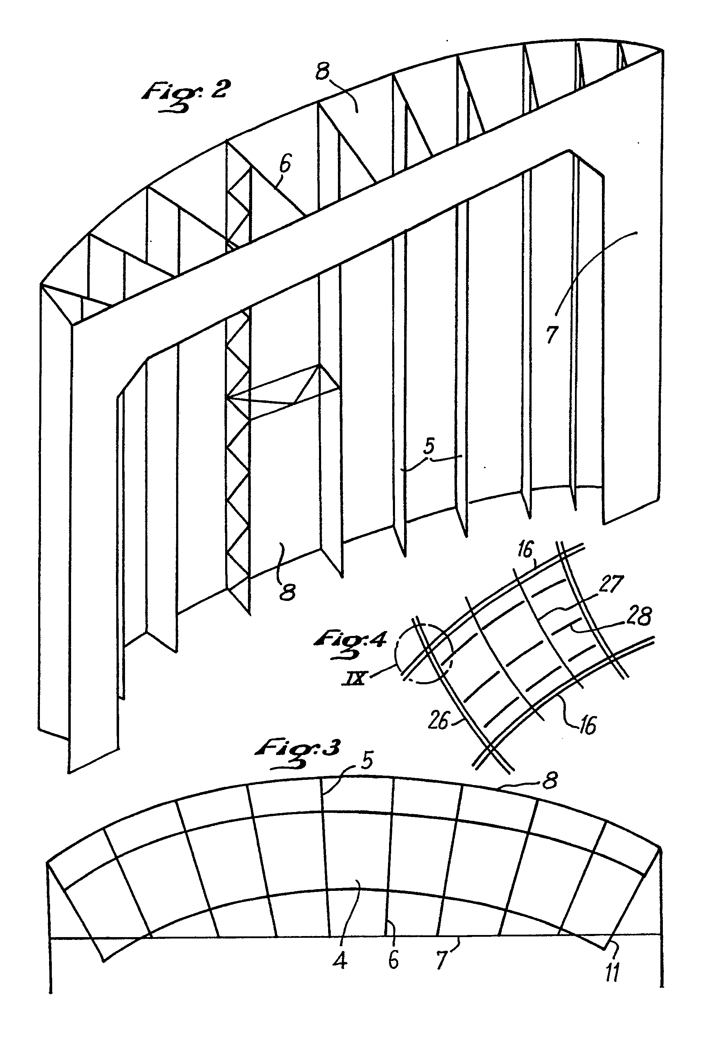

La figure 1 représente en 1 le sol de la salle selon l'invention, en 2 les gradins et en 3 le centre de l'écran sphérique 4, où est situé l'objectif du projecteur.

L'écran 4 est supporté pour l'essentiel par un ensemble de poutres triangulées 5 disposées verticalement avec leurs pieds répartis sur le sol le long d'un arc de cercle centré sur la verticale du point 3.

Les sommets des poutres sont reliés par des ferrures 6 au premier portique 7 d'un ensemble de portiques 7, 7'... servant de support à la partie arrière de la toiture de la salle. Par contre, la partie avant de cette toiture est supportée d'une part, par le portique 7 et d'autre part par les parties supérieures des poutres verticales 5.

La paroi de fond 8 de la salle est réalisée par un assemblage de plaques montées sur les parties radialement extérieures des poutres 5, et constitue par conséquent une paroi cylindrique à axe vertical passant par le point 3.

Si l'on se réfère maintenant à la figure 5, on voit que les poutres verticales 5 sont constituées pour l'essentiel de deux montants verticaux 9 réunis par des entretoises 10 de manière à former une poutre 5 sensiblement plane dans un plan radial par rapport à l'axe vertical passant par le point 3.

Chacune de ces poutres 5 porte un ensemble de pièces de compression 11 horizontales à section en L montées sur des platines 12 soudées sur le montant 9 radialement intérieur, et maintenues horizontales par des tirants obliques 13.

A l'extrémité de chaque pièce de compression 11 est soudée une équerre 14 permettant le montage à l'aide de boulons 15 de cintres circulaires 16 à section en U, ces cintres formant les parallèles horizontaux de l'écran sphérique.

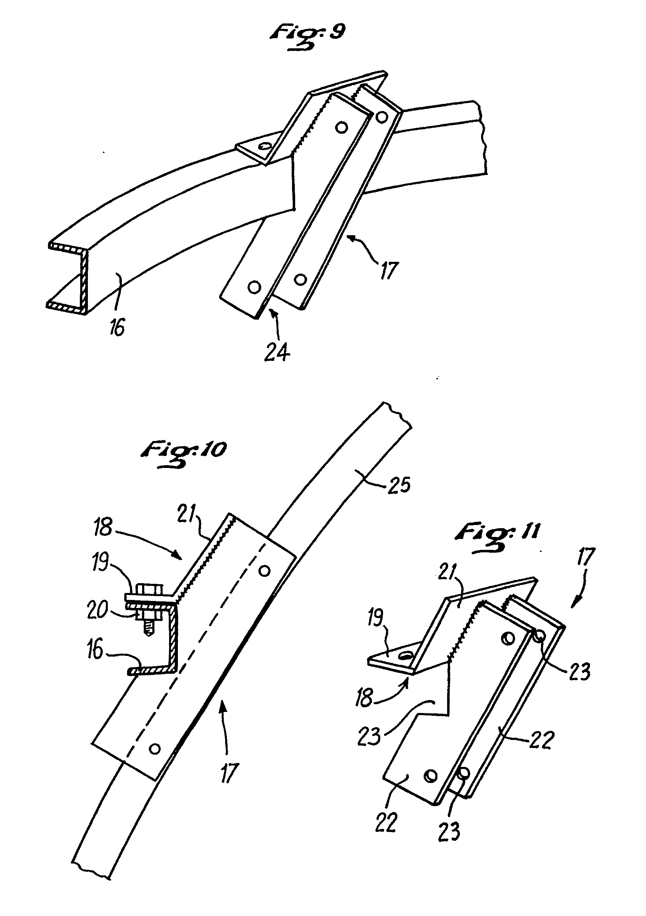

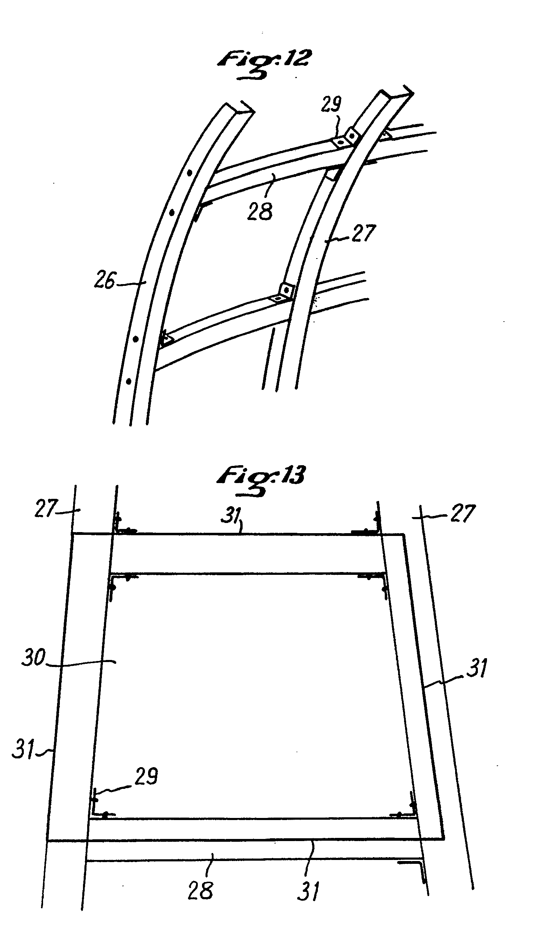

Si l'on se réfère aux figures 9 à 11, on voit que les cintres 16 reçoivent des ferrures 17 comprenant une cornière 18 dont l'une des ailes 19 est horizontale pour être montée à l'aide de boulons 20 sur l'aile supérieure du cintre 16, et dont l'autre aile 21 se trouve localement parallèle au plan de l'écran.

La cornière 18 reçoit deux plaques 22 soudées perpendiculairement sur l'aile 21 et comportant chacune une encoche 23 pour son encastrement dans le cintre 16. Les deux plaques 22 comportent des trous 23 et forment entre elles un espace 24 pour la fixation sur les ferrures 17 de profilé 25 courbés au rayon de l'écran pour former des arcs de grands cercles principaux 26 et des arcs de grands cercles intermédiaires 27 (figure 4).

Des traverses 28 parallèles aux cintres 16 sont montées entre les arcs de grands cercles 26, 27 à l'aide d'équerres 29.

On réalise ainsi une trame principale constituée par les cintres 16 et les grands cercles principaux 26, et une trame fine formée par les arcs de grands cercles intermédiaires 27 et les traverses 28.

L'écran proprement dit est formé de plaques 30 rivetées sur la trame comme représenté à la figure 13 (les bords de la plaque 30 sont représentés par les traits référencés 31).

Les plaques 30 sont réalisées à partir de trapèzes emboutis pour leur donner une forme sphérique, un chevauchement des plaques étant assuré du fait que deux des bords 31 adjacents couvrent totalement l'élément d'ossature sur lesquels ils sont fixés, alors que les deux autres bords 31 ne les recouvrent qu'à moitié.

Diverses variantes et modifications peuvent bien entendu être apportées à la description qui précède sans sortir pour autant ni du cadre ni de l'esprit de l'invention.

**Revendications**

1. Salle de projection cinématographique à écran sphérique, caractérisée par le fait qu'elle comprend une ossature de support d'écran comportant un ensemble de poutres (5) sensiblement verticales disposées sur un arc de cercle vues en projection dans un plan horizontal, un ensemble de poutres circulaires (25) formant des arcs de grands cercles principaux (26) dans les plans verticaux des poutres verticales passant par le centre de l'écran, et des arcs de cercles horizontaux (16), lesdites poutres circulaires et les arcs de cercles horizontaux étant montés sur les poutres verticales, et que des plaques d'écran (30) de forme trapézoïdale sont montées sur lesdits arcs de grands cercles principaux et lesdits arcs de cercles horizontaux.

2. Salle de projection selon la revendication 1, caractérisée par le fait que ladite ossature comprend en outre des arcs de grands cercles intermédiaires (27) montés sur lesdits axes de cercles horizontaux.

3. Salle de projection selon la revendication 2, caractérisée par le fait que ladite ossature comprend en outre des traverses horizontales circulaires intermédiaires (28) montées sur les arcs de grands cercles principaux et intermédiaires, les arcs de grands cercles principaux et les arcs de cercles horizontaux formant la trame principale de l'écran, et les axes de grands cercles intermédiaires et les traverses horizontales en formant la trame fine sur laquelle sont montées lesdites plaques.

4. Salle de projection selon l'une quelconque des revendications 1 à 3, caractérisée par le fait que lesdites plaques d'écran sont embouties.

5. Salle de projection selon l'une quelconque des revendications 1 à 4, caractérisée par le fait que lesdites poutres verticales supportent, du côté opposé à l'écran, une paroi cylindrique de fond (8), à axe vertical passant par le centre (3) de l'écran.

6. Salle de projection selon l'une quelconque des revendications 1 à 5, caractérisée par le fait qu'elle comprend un portique vertical de charpente (7) formant, en combinaison avec la poutre supérieure des poutres verticales, un support pour la partie du fond de la toiture de la salle.

Fig.1

Fig: 2

Fig: 4

Fig: 3

Fig.5

Fig.6

Fig.7

Fig.8

Fig. 9

16

24

17

Fig. 10

18

19

20

16

21

25

17

Fig. 11

21

19

18

23

23

17

23

22

22

23

*Fig.12*

*Fig.13*

| | Office européen des brevets | **RAPPORT DE RECHERCHE EUROPEENNE** | Numero de la demande |
| | | | EP  90 40 0907 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 533 037 (McGEEHON)<br>* Page 4, ligne 27 - page 5, ligne 11; page 8, lignes 10-24; figures *<br>--- | 1-2 | G 03 B  21/56 |
| A | US-A-2 942 517 (MOON)<br>* Colonne 2, ligne 13 - colonne 3, ligne 3; figures *<br>--- | 1-2 | |
| A | CH-A-  348 557 (CAPETTA)<br>* Page 1, ligne 46 - page 2, ligne 85; figures *<br>--- | 1-2 | |
| A | FR-A-2 590 375 (CHAMAYOU)<br>----- | | |

|  | DOMAINES TECHNIQUES RECHERCHES (Int. Cl.5) |
|---|---|
| | E 04 H<br>G 03 B |

**Le présent rapport a été établi pour toutes les revendications**

| Lieu de la recherche | Date d'achèvement de la recherche | Examinateur |
|---|---|---|
| LA HAYE | 24-08-1990 | LAUE F.M. |